# EUROPEAN PATENT SPECIFICATION

(11) **EP 3 944 989 B1**
(45) Date of publication and mention of the grant of the patent: **29.11.2023**
(21) Application number: 21184970.8
(22) Date of filing: 12.07.2021
(51) Int. Cl.: B60R 5/04

(54) **LOADING FLOOR PANEL FOR BOOT OF A VEHICLE**
LADEBODENPLATTE FÜR DEN KOFFERRAUM EINES FAHRZEUGS
PANNEAU DE PLANCHER DE CHARGEMENT DE DÉMARRAGE D'UN VÉHICULE

(30) Priority: 29.07.2020 ES 202030800
(43) Date of publication of application: 02.02.2022
(73) Proprietor: Seat, S.A., 08760 Martorell (ES)
(72) Inventor: CABELLO DE ALBA, Antonia, Barcelona (ES); COLET GALÍ, Joan, Barcelona (ES)
(74) Representative: Elzaburu S.L.P.

(56) References cited:
- EP-A1- 1 595 746
- DE-A1- 10 256 348
- DE-A1-102007 027 980
- DE-A1-102009 055 836
- FR-A1- 3 011 786

## Description

### Object of the invention

The object of the present invention is a loading floor panel for a boot of a vehicle that has the particularity of incorporating the handle to lift said loading floor panel, the handle forming a single part with said loading floor panel.

Another object of the present invention is a mould for manufacturing the loading floor panel, which enables manufacturing a loading floor panel with a handle, wherein the handle and the loading floor panel form a single part or body.

Another object of the present invention is a method for manufacturing the loading floor panel for a boot of a vehicle, so that by means of a process that includes stamping, the loading floor panel is formed with the handle, the whole assembly forming a single part.

The loading floor panel for a boot of a vehicle and the method for manufacturing said loading floor panel, object of the present invention, has application in the field of the design, manufacture and marketing industry of vehicles, especially motor vehicles.

### Background of the invention and technical problem to solve

In the state of the art, loading floor panels for boots are known, which enable a boot with a loading floor panel to be created, establishing two compartments within the boot of a vehicle: a lower compartment, typically intended to house a spare wheel and/or a vehicle tool kit; and, a larger upper compartment intended to house luggage and/or packages of a larger size.

To gain access to the lower compartment, it is necessary to lift the loading floor panel of the boot. This operation is manually carried out by a user of the vehicle, grasping the loading floor panel by a handle incorporated therein, and pulling said handle upwards, thereby raising the loading floor panel and accessing the space of the lower compartment.

In the state of the art, these handles are made as a double part, independent of the loading floor panel, a part typically made of plastic by means of an injection process. It is a double part that comprises an upper element or part and a lower element or part.

In order to incorporate this handle into the loading floor panel of the boot, a process is required after forming the loading floor panel of the boot, a process that involves placing the handle part in a perforation made in the loading floor panel of the boot. The lower element is placed under the loading floor panel, in correspondence with the perforation, and the upper element is placed above the loading floor panel, in correspondence with the perforation, proceeding to press the upper element against the lower element of the handle, fitting both elements by clipping, and pressing both elements of the handle to the loading floor panel of the boot in correspondence with the perimeter of the handle.

Another solution known in the state of the art is the implementation of a strap attached at both ends to the very loading floor panel of the boot. This strap performs the function of a handle, enabling a user to place his hand in the gap formed by the strap and the loading floor panel, so that he can pull said strap and lift said loading floor panel. A process after forming the loading floor panel of the boot is also required to attach both ends of the strap in holes or perforations made in the loading floor panel of the boot.

Therefore, according to the state of the art, to provide a vehicle with a boot with a loading floor panel which enables the user to access the lower boot compartment, a loading floor panel manufacturing process is required, another process for manufacturing the double part of the handle or manufacturing the strap, and a subsequent process for assembling the handle and the loading floor panel. All these processes make the manufacture and provision of loading floor panels in vehicle boots more expensive and slower, requiring the careful supervision and expertise of an operator in the process of assembling the handle on the loading floor panel.
Document DE 102009055836 A1 is known from the prior art. This document discloses a pivotable plate with an upper side and a lower side, at which a gripping unit is provided, where the gripping unit has a hand grip that is available at the upper side. The gripping unit has another hand grip that is available at the lower side.

### Description of the invention

In order to solve the aforementioned drawbacks, the present invention relates to a loading floor panel for the boot of a vehicle and a method for manufacturing said loading floor panel.

The loading floor panel for a boot of a vehicle object of the present invention incorporates a handle. The handle forms a single body with the loading floor panel.

The handle comprises a geometry comprising a first wall and a second wall. The first wall comprises an inlet section that makes up a first ramp. The first wall further comprises a first platform. The first wall further incorporates an outlet section in proximity or pointing towards the second wall. This outlet section thus forms a rear end of the first wall, wherein the term "rear" is understood to refer to a direction of travel or direction of advancement of the vehicle.

The second wall comprises an upper section (in proximity to the first wall), a second platform and a lower section. The upper section thus forms a front end of the second wall, wherein the term "front" is understood to refer to a direction of travel or direction of advancement of the vehicle.

The second platform of the second wall is arranged at a height equal to or greater than the first platform of the first wall.

Optionally, the orifice can comprise a second wall and a fourth wall, which can be oriented according to respective planes parallel to the direction of advancement of the vehicle.

Thus, the handle is configured so that, when inserting a hand through said handle, the inlet section and the first platform of the first wall guide the hand of the person/user towards the lower section of the second wall, in a space located below the second platform, thus enabling a person to lift the loading floor panel with his hand by pulling up the handle by the second platform thereof.

By means of a loading floor panel such as the one described above, it is possible to have the loading floor panel with a handle in a single part, thus being able to dispense with the assembly tasks of an auxiliary handle part.

Likewise, the loading floor panel of the invention has a comfortable and ergonomic handle geometry, which guarantees a space for inserting the user's hand and grasping the handle in correspondence with the extension, wherein the first ramp and the first platform enable the natural guidance of the user's hand into the space located below the extension.

The first wall can therefore comprise a geometry in the form of a step, comprising the inlet section, the first platform and the outlet section. The inlet section communicates the upper surface of the loading floor panel with the first platform by means of the first ramp of descending height that forms said inlet section. The outlet section communicates the first platform with the lower surface of the loading floor panel.

The second wall may comprise a step-shaped geometry complementary to the step-shaped geometry of the first wall. The upper section of the second wall communicates the upper surface of the loading floor panel with the second platform of the first wall. The lower section of the second wall communicates the second platform with the lower surface of the loading floor panel.

Thus, preferably, the upper surface of the loading floor panel, the lower surface of the loading floor panel, the first platform of the first wall of the handle and the second platform of the second wall of the handle are all surfaces parallel to each other.

According to a possible embodiment, the handle comprises a hollow space, according to a direction of advancement of the vehicle, between the outlet section of the first wall and the upper section of the second wall. This facilitates the manufacturing of the loading floor panel, if a manufacturing method by means of moulding is used.

According to a preferred embodiment of the invention, the loading floor panel comprises, in correspondence with an upper surface of the loading floor panel, a covering layer. The covering layer is typically a textile or carpet covering. This feature offers a user-friendly finish and appearance, covering up the perhaps rougher aspect of the materials that form the loading floor panel.

According to a possible embodiment of the loading floor panel (see second and third embodiments described below), the loading floor panel comprises a perimeter recess that surrounds the perimeter of the handle.

As mentioned above, and according to a possible embodiment (see third embodiment described below), the covering layer is preferably folded in the perimeter recess along the entire perimeter of the handle except in the section corresponding to the second wall. In this section corresponding to the second wall of the handle, the covering layer edges, at least partially, the upper section and the second platform of the second wall of the handle.

Thus, according to this third embodiment, it is guaranteed that the possible burrs that may exist in the upper section of the second wall do not cause a nuisance or create a non-optimal feeling to the touch to a user who makes use of the handle. In this way, according to this second embodiment, the covering layer would be above said possible burrs that could exist, covering the upper section and the second platform of the second wall.

Optionally, in this third embodiment, there could be no perimeter recess in the section that surrounds the handle in correspondence with the second wall, since said section is covered by the covering layer.

According to a possible embodiment of the loading floor panel (see second embodiment described below), the covering layer is folded along the entire perimeter recess, exposing the first wall and the second wall of the handle.

This enables a somewhat simpler manufacturing than the third embodiment, obtaining in any case a very good quality finish. If there are burrs in correspondence with the upper section of the second wall, an operation can be applied to eliminate said existing material in said upper section, removing or reducing the volume of said burrs.

According to an alternative embodiment (see first embodiment of the loading floor panel described below), the covering layer completely covers the first wall and the upper section of the second wall of the handle.

The surface finish exhibited by this embodiment, and the feeling of comfort offered to the user, due to the smoothness of the surfaces, are optimal.

Preferably, in this first embodiment of the loading floor panel there is no perimeter recess that surrounds the handle, since the covering layer will not tuck into any recess, but rather it remains adhered to the surface of the first wall and of the second wall of the handle.

If the handle further comprises a third wall and a fourth wall, as mentioned above, this third wall and this fourth wall are preferably also covered by the covering layer in this first embodiment.

Preferably, the loading floor panel for the boot of a vehicle object of the present invention is formed by a laminar structure comprising a core of cellulosic material, adjacent layers of fibreglass on each side of the core, and end layers of polyurethane or polypropylene on an outer face of each of the adjacent layers.

The covering layer is arranged on one of the end layers, specifically on the upper surface of the loading floor panel that is directed into the main boot compartment, that is, in view of the user when the boot is opened.

The present invention is also directed to the mould that enables manufacturing the loading floor panel for a boot, as described above.

The mould comprises an upper die and a lower die configured to close one on the other by pressing an arrangement of materials previously inserted into a cavity generated between the upper die and the lower die of the mould for manufacturing the loading floor panel.

In a novel manner, the upper die and the lower die comprise projections that are placed in mutual correspondence when the upper die closes against the lower die. Said projections are configured to form a handle on said loading floor panel as described above.

Preferably, the upper die projection comprises blades for cutting material, thus facilitating the cutting of material for producing the handle.

By means of a mould such as that described, a loading floor panel can be ideally manufactured according to the first embodiment of the loading floor panel.

Likewise, there is the possibility that the upper die incorporates a sliding part wherein the projection of the upper die is located. The slide is configured to tilt with respect to the rest of the upper die according to a direction oblique to the upper surface of the loading floor panel, thereby cutting the material of the loading floor panel for producing the handle.

With the variant of the mould described in the previous paragraph, the loading floor panel can also be manufactured according to the first embodiment. This variant enables a simpler handling of the mould, since in the upper die the cutting of material for producing the handle is done by moving only the sliding part.

Preferably, in the variants of the mould described above, the lower die comprises an orifice configured to enable the cut material to pass through the interference (confluence area) generated between the projection of the upper die and the projection of the lower die.

In this way, the material that has been cut is enabled to be removed, letting it fall through the orifice in the lower die.

According to a possible embodiment of the mould, the projection of the lower die comprises blades for cutting material.

This enables the projection of the lower die to perform a more efficient cutting action, favouring the shaping of the lower portion of the handle.

This is especially useful for manufacturing the loading floor panel, according to the second and third embodiments. The blades of the projections of each die enable the surface material to be cut and torn off, minimising the amount of burr formed after cutting. Even more preferably, the blades of the projections of both dies touch in a confluence area when closing the upper die on the lower die.

Preferably, according to the embodiment of the mould described in the previous paragraph, between the projection of the upper die and the projection of the lower die there is a filling space configured to be filled with the material that has been cut due to the interference generated between the projection of the upper die and the projection of the lower die.

This enables the material detached in the cut to be removed, facilitating the closure of the upper die on the lower die, since the material detached in the cut does not hinder the closure or diminish the quality of the surface finish of the loading floor panel, when removed towards said filling space.

Preferably, as described in the last five paragraphs, the upper die of the mould comprises notches (or a single continuous notch) around the projection. Said at least one notch is configured for producing a perimeter recess around the handle.

In this way, it is possible to ideally manufacture the loading floor panel with a perimeter recess around the handle, according to the second and third embodiments of the loading floor panel.

As already introduced above, the present invention also relates to a method for manufacturing a loading floor panel for the boot of a vehicle according to claims 1-6.

The method for manufacturing a loading floor panel comprises:
- inserting a laminar arrangement of materials to form the loading floor panel into a mould as described above, and;
- pressing the laminar arrangement of materials inside the mould to form the loading floor panel, the handle forming a single body with the loading floor panel.

According to a possible embodiment of the method for manufacturing a loading floor panel, the method comprises making use of the mould described as ideal for manufacturing the first embodiment of the loading floor panel. Thus, the method comprises arranging inside the mould, prior to shaping the loading floor panel, a covering layer on the laminar arrangement of materials, and pressing the laminar arrangement of materials with the covering layer inside the mould, obtaining a loading floor panel wherein the covering layer covers the first wall and the upper section of the second wall of the handle. It is thus possible to manufacture the loading floor panel according to the first described embodiment of the loading floor panel.

Preferably, with the method described in the previous paragraph it is achieved that the covering layer also covers the third wall and the fourth wall of the handle of the loading floor panel, in the event that the handle incorporates said third wall and said fourth wall.

According to another possible embodiment, the method comprises making use of the mould (described above) comprising a perimeter notch or notches, to manufacture the loading floor panel according to the second or third embodiments. Thus, according to this possible embodiment of the method, the method comprises, after shaping the loading floor panel inside the mould, positioning a covering layer on the loading floor panel and making an opening in the covering layer in correspondence with the handle, adhering the covering layer to the upper surface of the loading floor panel and folding the covering layer on the perimeter recess in correspondence with the edge of the opening made.

According to the embodiment of the method described in the previous paragraph, the method may comprise filing the upper section of the second wall of the handle after extracting it from the mould, to remove the burrs of material generated in the moulding process.

According to another possible embodiment of the method for manufacturing the loading floor panel, the method further comprises making use of the mould (described above) comprising a perimeter notch or notches, to manufacture the loading floor panel according to the second or third embodiments. Thus, according to this possible embodiment of the method, the method comprises, after shaping the loading floor panel inside the mould, positioning a covering layer on the loading floor panel and making an opening in the covering layer in correspondence with the handle, adhering the covering layer to the upper surface of the loading floor panel and folding the covering layer along the perimeter recess in correspondence with the edge of the opening made, except in a section in correspondence with the second wall of the handle. In this section in correspondence with the second wall of the handle, at least the upper section and the second platform of the second wall are edged with the covering layer. The opening in the covering layer can be made prior to the insertion of the covering layer inside the mould. It is thus possible to manufacture the loading floor panel according to the third described embodiment of the loading floor panel.

The laminar arrangement of materials inserted inside the mould may comprise a core of cellulosic material arranged between two adjacent layers of fibreglass. The manufacturing method may comprise spraying this set of materials (this arrangement of materials) with a spray of polyol and isocyanate to form a polyurethane layer, and pressing the arrangement of materials inside the mould, producing the cut to form the handle before the polyurethane has reacted completely, such that the polyurethane completely covers the core of cellulosic material on all the edges of the handle generated in the steps of pressing and cutting the loading floor panel.

It is thus achieved that no portions of the core of cellulosic material are visible, which would not only worsen the aesthetic appearance of the loading floor panel or worsen the haptics or touch with the user, but could also favour the degradation of the core in the presence of moisture, resulting in a reduction in the mechanical behaviour of the loading floor panel.

### Brief description of the figures

The following figures have been included as part of the explanation of at least one embodiment of the invention.
Figure 1 shows a schematic view of a handle for a loading floor panel of a boot, according to the state of the art, wherein the handle formed by a double part that is attached to the loading floor panel is observed.
Figure 2a shows a schematic perspective view of a detail of a first embodiment of the loading floor panel for a boot, wherein the handle is observed, manufactured according to the first modality of the manufacturing method of the loading floor panel.
Figure 2b shows a schematic cross sectional view, according to the cross section AA, of the loading floor panel for a boot of Figure 2a.
Figure 3a shows a schematic perspective view of a detail of a second embodiment of the loading floor panel for a boot, wherein the handle is observed, manufactured according to the first variant of the second modality of the manufacturing method of the loading floor panel.
Figure 3b shows a schematic cross sectional view, according to the cross section AA, of the loading floor panel for a boot of Figure 3a.
Figure 4a shows a schematic perspective view of a detail of a third embodiment of the loading floor panel for a boot, wherein the handle is observed, manufactured according to the second variant of the second modality of the manufacturing method of the loading floor panel.
Figure 4b shows a schematic cross sectional view, according to the cross section AA, of the loading floor panel for a boot of Figure 4a.
Figure 5 shows a schematic view, according to the cross section BB of Figure 3a and Figure 4a, of the handle according to the second and third embodiments of the loading floor panel for a boot.
Figure 6 shows a perspective view of the boot of a vehicle, with a loading floor panel according to the second embodiment shown in Figure 3a.
Figure 7 shows a schematic exploded perspective view of the laminar structure of the loading floor panel for a boot.
Figure 8 shows a schematic view of the manufacture of the loading floor panel for a boot, according to the first variant of the first modality of the method for manufacturing the loading floor panel, to manufacture the first embodiment of the loading floor panel.
Figure 9 shows a schematic view of the manufacture of the loading floor panel for a boot, according to the second variant of the first modality of the method for manufacturing the loading floor panel, to manufacture the first embodiment of the loading floor panel.
Figure 10 shows a schematic view of the manufacture of the loading floor panel for a boot, according to the first or second variants of the second modality of the method for manufacturing the loading floor panel, to manufacture the second and third embodiments of the loading floor panel.

### Detailed description

The present invention relates, as mentioned above, to a loading floor panel (1) for a boot and to a method for manufacturing said loading floor panel (1).

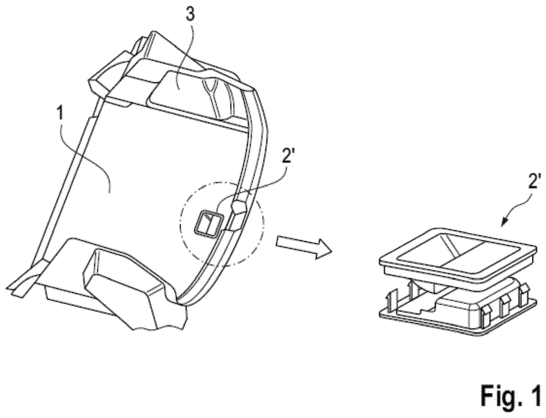

Figure 1 shows a loading floor panel (1) for a boot according to the state of the art, which incorporates a conventional double handle part (2'), formed by an upper component and a lower component attached by means of clipping on the loading floor panel (1) in the same mounting operation.

As already mentioned, in the present invention, the loading floor panel (1) incorporates a handle (2), all formed by a single part.

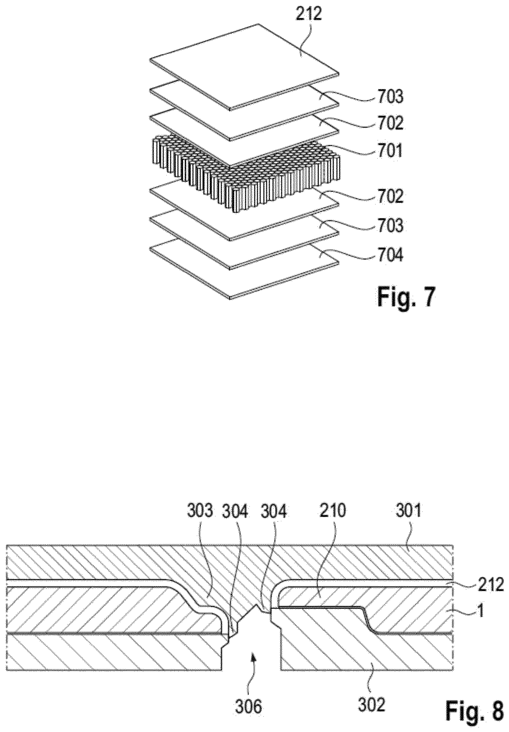

The loading floor panel (1) for a boot comprises a laminar structure (see Figure 7), with a handle (2) configured to enable the insertion of a user's hand to lift said loading floor panel (1).

When the user inserts his hand through the handle (2) and pulls the loading floor panel (1) upwards, the loading floor panel (1) is lifted.

Preferably, the loading floor panel (1) has an approximately rectangular geometry, wherein the handle (2) is located in proximity to a first larger side (11) of the loading floor panel (1), in correspondence with the centre of said first larger side (11).

The loading floor panel (1) may comprise rods in proximity to a second larger side (12) of the loading floor panel (1), in correspondence with the ends of said second larger side (12), and located at the lower portion of the loading floor panel (1). Said rods are configured to provide articulated joints between the loading floor panel (1) and a side wall (3) of the boot or a support of the tray, so that when the user pulls the loading floor panel (1) upwards, the loading floor panel (1) rotates with respect to said articulated joints. Thus, the side walls (3) of the boot comprise projections and recesses configured to hold and retain the loading floor panel (1) in different positions within the boot. For example, a first position being lifted with respect to the base of the boot, but substantially parallel to said base. Or a second position with the loading floor panel (1) inclined with respect to said base of the boot. To be able to move the loading floor panel (1) between the plurality of positions, a comfortable handling of the loading floor panel (1) through the handle (2) is necessary.

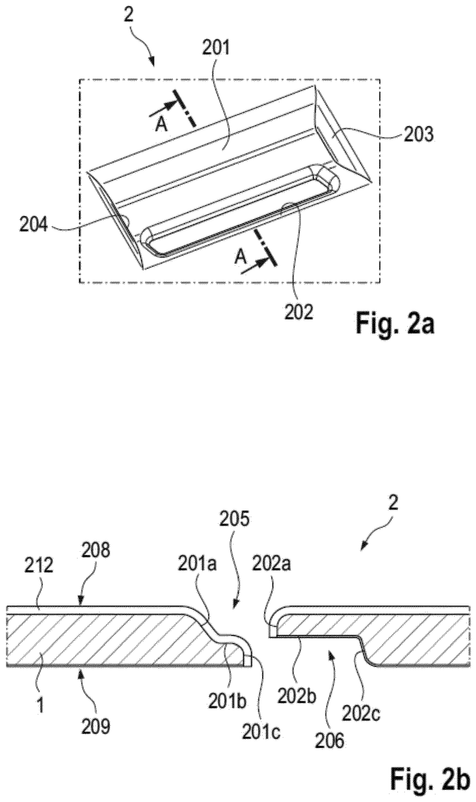

The handle (2) has a sinuous channel geometry (see Figure 2b, Figure 3b and Figure 4b), with an upper inlet (205) and a lower outlet (206), the upper inlet (205) being partially misaligned with respect to the lower outlet (206), an overlapping section existing wherein the upper inlet (205) and the lower outlet (206) are located in the same vertical.

Thus, the handle (2) is in the shape of a conduit with a first wall (201), a second wall (202), a third wall (203) and a fourth wall (204) (see Figure 2a, Figure 3a and Figure 4a).

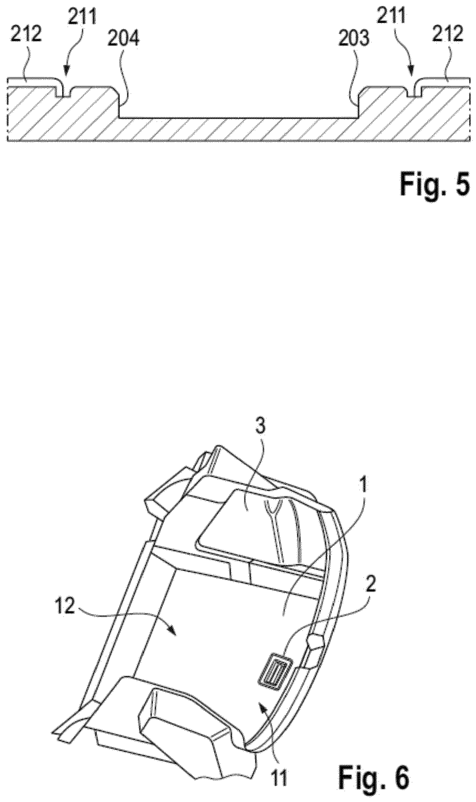

The third wall (203) and the fourth wall (204) are parallel to each other (see Figure 5), oriented vertically according to a plane perpendicular to the upper surface (208) or the lower surface (209) of the rest of the loading floor panel (1). The third wall (203) and the fourth wall (204) are oriented according to a vertical plane parallel to the direction of advancement of the vehicle.

However, according to other possible embodiments, the third wall (203) and the fourth wall (204) can have an inclined geometry, and/or with different inclination planes, curved surfaces, etc.

The first wall (201) and the second wall (202) do not exhibit a geometry according to a single vertical plane, but rather exhibit a geometry with a horizontal section and an inclined and/or vertical section.

The first wall (201) has an inlet section (201a) or first ramp, inclined with respect to the upper surface (208) and the horizontal lower surface (209) of the rest of the loading floor panel (1).

The first wall (201) has, between the inlet section (201a) and an outlet section (201c), a first platform (201b) that extends according to a plane parallel to the upper surface (208) and the horizontal lower surface (209) of the rest of the loading floor panel (1).

The first wall (201) has, between the first platform (201b) and the lower surface (209) of the loading floor panel (2), the mentioned vertical outlet section (201c).

The second wall (202) has a vertical upper section (202a). Said vertical upper section (202a) is the edge of an extension (210) of the upper surface (208) of the loading floor panel (1) cantilevered over the hollow space of the conduit that forms the handle (2).

The second wall (202) has a second platform (202b) extending according to a plane parallel to the upper surface (208) and the horizontal lower surface (209) of the rest of the loading floor panel (1).

Said second platform (202b) of the second wall (202) is the lower portion of the aforementioned extension (210).

The second wall (202) has a lower section (202c). Said lower section (202c) comprises a surface selected between a second ramp or inverted ramp, a vertical section (perpendicular to the upper surface (208) and the horizontal lower surface (209) of the rest of the loading floor panel (1)) and a combination of second ramp and vertical section.

The inlet section (201a) or first ramp of the first wall (201) serves to guide the fingers of the user's hand towards the area located below the extension (210), under the second platform (202b), which is the area from which the user will pull up the loading floor panel (1) to lift it.

In this way, the inlet section (201a) or first ramp of the first wall (201) and the extension (210) with the lower section (202c) of the second wall (202) guarantee that there is a space exclusively reserved for the insertion of the user's hand, so that the user has space to grasp the loading floor panel (1) and pull it up to lift it.

It must be taken into account that, under the loading floor panel (1), there may be objects stored, so it is important that the handle (2) guarantees and reserves enough space for the insertion of the fingers of the user's hand.

The loading floor panel (1) comprises a perimeter recess (211), which surrounds the perimeter of the handle (2). Said perimeter recess (211) is configured to tuck in the covering layer (212) or textile (or carpet) coating layer of the loading floor panel (1), in such a way that the handle (2) is visible and accessible so that the user can insert his hand to lift said loading floor panel (1).

According to a possible embodiment (see Figure 7), the loading floor panel (1) comprises a laminar structure formed by a central core (701) made of a honeycomb-shaped paper pulp or cellulosic structure, two layers (702) adjacent to the core (701), one on each side of the core (701), formed by fibreglass, and two end layers (703), each one covering the corresponding layer (702) adjacent to the core (701), said end layers (703) being formed by polyurethane (PUR) or by polypropylene (PP).

On the upper end layer (703) (made of polyurethane or polypropylene) the covering layer (212) or textile carpet coating layer is usually placed.

Optionally, on the lower end layer (703), an additional layer (704) of vlieseline can be placed.

As already mentioned, the present invention also relates to a method for manufacturing the loading floor panel (1) for a boot of a vehicle described above.

The loading floor panel (1) for a boot object of the present invention is manufactured by means of a method that comprises shaping the loading floor panel (1) together with the handle (2) by stamping or pressing.

According to a first modality of the manufacturing method, the textile or carpet covering layer (212) is shaped and adhered to the loading floor panel (1) at the same time that the stamping die or dies shape the loading floor panel, the textile covering layer (212) being therefore inside the manufacturing mould.

According to a second modality of the manufacturing method, the textile covering layer (212) adheres to the loading floor panel after the loading floor panel (1) has been shaped by means of the stamping die or dies (301, 302).

According to the first modality, a lower die (302) can be used to shape the lower portion or surface (209) of the loading floor panel (1) (which does not have a surface covering layer (212)) and an upper die (301) to shape the upper portion or surface (208) of the loading floor panel (1) with the surface covering layer (212).

Figure 8 shows a detail of the upper die (301) and the lower die (302), according to the first variant of the first modality of the manufacturing method. According to this first variant of this first modality, the upper die (301) is formed by a single part wherein the upper die (301) shapes the upper surface (208) of the loading floor panel (1) with the covering layer (212), and wherein the upper die (301) comprises a projection (303) with blades (304) to perforate the loading floor panel (1) with the covering layer (212) in the area corresponding to the handle (2), producing a shape of the handle (2) as described above, wherein the covering layer (212) is adhered to the upper surface (208) of the loading floor panel (1), reproducing the shape of the handle (2) with the surfaces and/or ramps thereof. An orifice (306) is also observed for the passage of material detached by the cutting of the laminar structure of the loading floor panel.

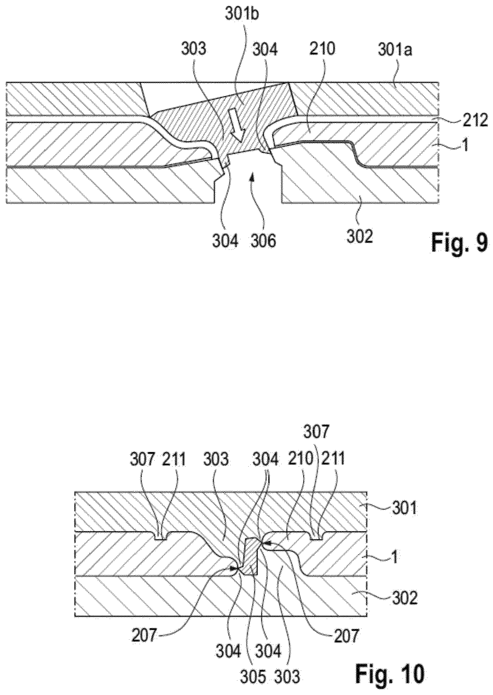

Figure 9 shows a detail of the upper die (301) and the lower die (302), according to the second variant of the first modality of the method for manufacturing the loading floor panel (1). According to this second variant of the first modality, the upper die (301) can be formed by two parts articulated together, the larger part (301a) to shape the entire upper surface (208) of the loading floor panel (1) with the covering layer (212), and the smaller or sliding part (301b) configured to perforate and shape the handle (2) with the covering layer (212) adhered to the upper surface (208) of the loading floor panel (1), reproducing the shape of the handle (2) with the surfaces and/or ramps thereof. In this case, the articulated smaller or sliding part (301b) presses and cuts the loading floor panel (1) with the covering layer (212) according to an oblique direction (not vertical), as shown in Figure 9. The slider (301b) further comprises a projection (303) with the corresponding blades (304) thereof to make the cut in the area corresponding to the handle (2). Here an orifice (306) is also observed for the passage of material detached by the cutting of the laminar structure of the loading floor panel.

Figure 10 shows the manufacture of the loading floor panel according to a second modality of the manufacturing method, aimed at obtaining the second embodiment and the third embodiment of the loading floor panel.

Figure 10 shows the upper die (301) and the lower die (302) with the projections (303) thereof equipped with blades (304), and the filling space (305) between the projection (303) of the upper die (301) and the projection (303) of the lower die (302), for accumulating material that has detached from the laminar structure of the loading floor panel (1).

According to the second modality of the manufacturing method, the shaping of the loading floor panel (1) with the handle (2) thereof is carried out in a first step, by means of the corresponding stamping die or dies (301, 302). In a second step, the covering layer (212) is adhered to the upper surface (208) of the loading floor panel (1). There is thus a modality of the manufacturing method in two steps, a first step in which, by means of a blow of the die, the loading floor panel (1) is formed with the handle (2) and the perimeter recess (211), and a second step for adhering the covering layer (212) to the upper surface (208) of the loading floor panel (1).

As mentioned, the handle (2) can be surrounded by the perimeter recess (212) that is formed in the step of shaping the loading floor panel (1) by means of the stamping die or dies (301, 302), specifically, the perimeter recess (211) is formed by means of an upper die (301) that shapes the upper surface (208) of the loading floor panel (1) and creates said perimeter recess (212) by means of one or more notches (307).

According to a first variant of the second modality of the method for manufacturing the loading floor panel (1), the covering layer (212) is adhered to the upper surface (208) of the loading floor panel (1). The textile covering layer (212) has a cut or opening of approximately the same dimensions as the handle (2), in such a way that, when adhering the textile covering layer (212) to the loading floor panel (1), said cut is located in correspondence with the position of the handle (2). Subsequently, the edges of said cut or opening of the textile covering layer (212) are folded in the perimeter recess (211).

According to a second variant of the second modality of the method for manufacturing the loading floor panel (1), the covering layer (212) is adhered to the upper surface (208) of the loading floor panel (1). As in the first variant of the second modality, the textile covering layer (212) has a cut or opening of approximately the same dimensions as the handle (2), in such a way that, when adhering the textile covering layer (212) to the loading floor panel (1), said cut is located in correspondence with the position of the handle (2). Subsequently, according to the second variant, the edge of the handle (2) is covered or edged with the textile covering layer (212) in the area corresponding to the extension (210), tucking the covering layer (212) underneath the extension (210) and adhering it to the loading floor panel (1) below the extension (210). In the rest of the perimeter of the handle (2), the edges of said cut or opening of the textile covering layer (212) are folded into the perimeter recess (211), as was done according to the first variant of the second modality of the method for manufacturing the loading floor panel (1).

Figure 10 shows a schematic view of the manufacture of the loading floor panel (1), specifically of the first step of shaping the loading floor panel (1) according to the first variant or the second variant of the second modality of the manufacturing method.

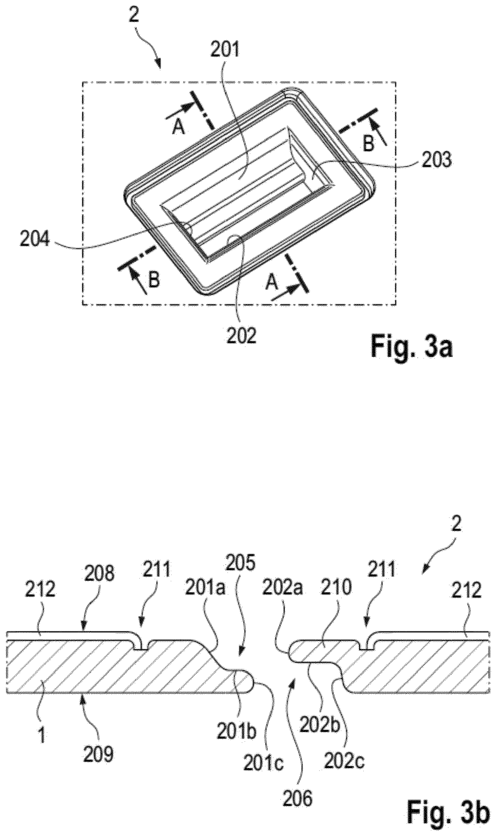

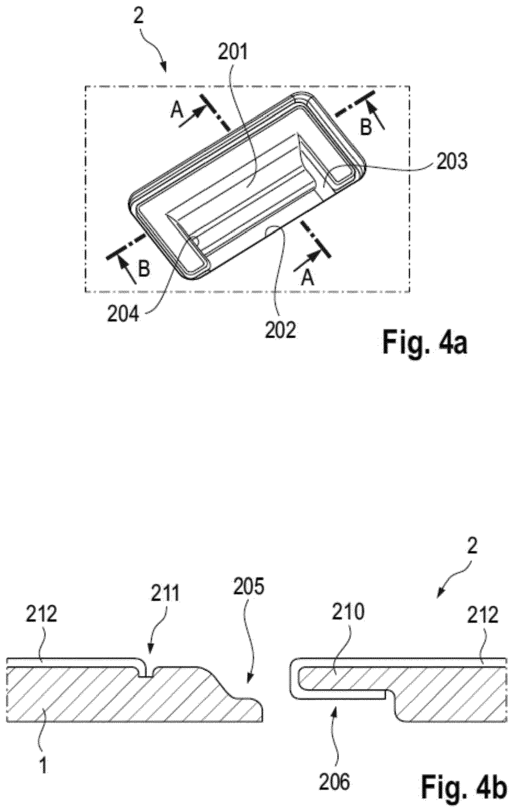

During the manufacture of the loading floor panel (1), especially during the manufacture according to the second modality of the manufacturing method, material burrs may be generated in the confluence area (207) of the stamping dies (301, 302). In particular, burrs may be generated in the area corresponding to the edge of the extension (210) or upper section (202b) of the second wall (202) of the handle (2), as well as in the area corresponding to the outlet section (201c) of the first wall (201) of the handle (2). This fact means that, when a user inserts his hand through the handle (2) and surrounds the extension (210) with his fingers to lift the loading floor panel (1) from the boot, he can feel said mark or burr on the edge or border of the extension (210). This occurs when the textile covering layer (212) is folded in the perimeter recess (211) (see Figure 3a and Figure 3b). Although this sensation is not unpleasant or bothersome, sometimes it may be preferred to avoid this circumstance. Filing or sanding said excess burr can be carried out after the shaping process of the loading floor panel (1) by stamping. Alternatively, the second variant of the second modality of the manufacturing method can be used, wherein said burr is concealed under the covering layer (212) that surrounds the extension (210) and is tucked underneath the same (see Figure 4a and Figure 4b).

Figure 10 shows a detail of the upper die (301) and the lower die (302) for stamping the loading floor panel (1), according to either of the two variants of the second modality of the method for manufacturing the loading floor panel (1). It is observed how both dies (301, 302) comprise projections (303) finished in blades (304), which shape the handle (2), both at the upper portion and at the lower portions of the handle (2). Between the projection (303) of the upper die (301) and the projection (303) of the lower die (302), there is a filling space (305) intended to be filled with the torn off or excess material from the laminar structure of the loading floor panel (1), by pressing the upper die (301) and the lower die (302) against the material of the loading floor panel (1). The area corresponding to the blades (304) of the upper die (301) is configured to contact the area corresponding to the blades (304) of the lower die (302), in the so-called confluence area (207), when both dies (301, 302) press the material of the loading floor panel (1). In this way, the burr generated in the stamping process is minimised, being limited to a few millimetres that protrude from the loading floor panel (1), in the confluence area (207) in correspondence with the position of said blades (304) of the upper die (301) and of the lower die (302).

Preferably, between the outlet section (201c) (or rear end) of the first wall (201) and the upper section (202a) (or front end) of the second wall (202), there is a distance (measured in the direction of advancement of the vehicle) of at least 15 mm (preferably at least 35 mm), to enable the fingers of the user's hand to be inserted and so that, during the manufacture of the loading floor (1), there is sufficient overlap between the upper die (301) and the lower die (302).

Likewise, preferably, between the lower section (202c) of the second wall (the second ramp or inverted ramp of the second wall (202)) and the perimeter recess (211), there is a minimum distance of 15 mm, in order to guarantee rigidity and avoid folding the loading floor panel (1) in the area of the extension (210) when the user exerts an upward force with his hand pulling the loading floor panel (1) to lift it.

Thus, some surfaces of the loading floor panel (1) with the handle (2) thereof are mainly shaped by the upper die (301) and some surfaces of the loading floor panel (1) with the handle (2) thereof are mainly shaped by the lower die (302).

Specifically, the upper die (301) contacts and shapes the upper surface (208) of the loading floor panel (1), the perimeter recess (211) (in the event there is one), the inlet section (201a) of the first wall ( 201) of the handle (2) and the first platform (201b) of the first wall (201) of the handle (2). The upper die (301) also contacts and partially shapes the upper section (202a) of the second wall (202) of the handle (2) and the outlet section (201c) of the first wall (201) of the handle (2).

Furthermore, the lower die (302) contacts and shapes the lower surface (209) of the loading floor panel (1), the outlet section (202c) of the second wall (202) of the handle (2) and the second platform (202b) of the second wall (202) of the handle (2). The lower die (302) also contacts and partially shapes the outlet section (201c) of the first wall (201) of the handle (2) and the upper section (202a) of the second wall (202) of the handle (2).

In this way, by means of the upper die (301) and the lower die (302) of the mould, it is possible to generate the step-shaped geometries of the first wall (201) and of the second wall (202) of the handle (2), being offset with each other and separated by an intermediate space so that each die can shape the step of the first wall (201) or of the second wall (202), as appropriate.

Moreover, preferably, the minimum thickness of the loading floor panel (1) is 9 mm, and the minimum agreement radii are 3 mm thick.

Likewise, it is worth mentioning that in the manufacture of the loading floor panel (1) with the laminar structure thereof, the cardboard or cellulosic material assembly (which forms the core (701) of the laminar structure of the loading floor panel (1)) and the fibreglass are inserted into a mould. Subsequently, the polyol and isocyanate (PUR components) are sprayed inside the mould in the form of a spray or aerosol. The mould is closed with the upper portion or upper die (301) thereof and the lower portion or lower die (302) thereof and the two components mix with each other, beginning to react.

In this reaction, an expansion takes place, occupying all the free spaces that the mould allows. In this case, there is little space to the outside, so the PUR grows inwards, mixing with the fibreglass and the cardboard, producing a mixture between the 4 components in the entire perimeter area of the loading floor panel (1) (both the outer perimeter of the loading floor panel (1) and the perimeter or edge of the handle (2)).

This mixture of the components means that, especially in the area of the handle (2) where a cutting of material takes place, the cardboard or cellulosic core (701) is not visible on the outside, which could damage and deteriorate the structure of the loading floor panel (1), in the event of humidity.

Therefore, in the method for manufacturing the loading floor panel (1) object of the invention, the cutting of the material that forms the loading floor panel (1) to produce the handle (2) preferably takes place before the PUR has completely reacted, to allow time for said mixture of materials to be created and to lightly cover the cardboard or cellulosic core (701) that remains on the external surface after the cutting process.

## Claims

1. A loading floor panel (1) for a boot of a vehicle comprising a handle (2) wherein the handle (2) forms a single body with the loading floor panel (1), wherein the handle (2) comprises a geometry comprising a first wall (201) and a second wall (202), wherein the first wall (201) comprises an inlet section (201a) that forms a first ramp, a first platform (201b) and an outlet section (201c) in proximity to the second wall (202), and wherein the second wall (202) comprises an upper section (202a) in proximity to the first wall (201), a second platform (202b), and a lower section (202c), wherein the second platform (202b) is arranged at a height equal to or greater than the first platform (201b), so that the handle (2) is configured so that, when inserting a hand through said handle (2), the inlet section (201a) and the first platform (201b) of the first wall (201) guide the hand towards the lower section (202c) of the second wall (202), in a space located under the second platform (202b), thus enabling a person to lift the loading floor panel (1) with his hand by pulling up the handle (2) by the second platform (202b) thereof.

2. The loading floor panel (1) according to claim 1, **characterised in that** the first wall (201) comprises a step-shaped geometry, comprising the inlet section (201a), the first platform (201b) and the outlet section (201c), wherein the inlet section (201a) communicates the upper surface (208) of the loading floor panel (1) with the first platform (201b) by means of the first ramp of descending height, and wherein the outlet section (201c) communicates the first platform (201b) with the lower surface (209) of the loading floor panel (1).

3. The loading floor panel (1) according to any of claims 1 or 2, **characterised in that** the second wall (202) comprises a step-shaped geometry complementary to the step-shaped geometry of the first wall (201), wherein the upper section (202a) of the second wall (202) communicates the upper surface (208) of the loading floor panel (1) with the second platform (202b) of the first wall, and wherein the lower section (202c) of the second wall (202) communicates the second platform (202b) with the lower surface (209) of the loading floor panel (1).

4. The loading floor panel (1) according to any of the preceding claims, **characterised in that** the handle (2) comprises a hollow space, according to a direction of advancement of the vehicle, between the outlet section (201c) of the first wall (201) and the upper section (202a) of the second wall (202).

5. The loading floor panel (1) according to any of the preceding claims, **characterised in that** it comprises:
- in correspondence with an upper surface (208) of the loading floor panel (1), a covering layer (212), and/or;
- a perimeter recess (211) that surrounds the perimeter of the handle (2).

6. The loading floor panel (1) according to any of the preceding claims, **characterised in that** it is formed by a laminar structure comprising a core (701) of cellulosic material, adjacent layers (702) of fibreglass on each side of the core (701), and end layers (703) made of polyurethane or polypropylene on an outer face of each of the adjacent layers (702).

7. A mould for manufacturing the loading floor panel (1) for the boot of a according to any of claims 1 to 6, wherein the mould comprises an upper die (301) and a lower die (302) configured to close one on the other by pressing an arrangement of materials previously inserted into a cavity generated between the upper die (301) and the lower die (302) of the mould for manufacturing the loading floor panel (1), **characterised in that** the upper die (301) and the lower die (302) comprise projections (303) that are located in mutual correspondence when the upper die (301) is closed against the lower die (302), wherein said projections (303) are configured for shaping a handle (2) on said loading floor panel (1).

8. The mould according to claim 7, **characterised in that** the projection (303) of the upper die (301) comprises blades (304) for cutting material and/or the projection (303) of the lower die (302) comprises blades (304) for cutting material.

9. The mould according to claim 8, **characterised in that** the upper die (301) comprises a sliding part (301b) wherein the projection (303) of the upper die (301) is located, wherein the slider (301b) is configured to tilt with respect to the rest of the upper die (301) according to a direction oblique to an upper surface (208) of the loading floor panel (1), thereby cutting the material of the loading floor panel (1) for producing the handle (2).

10. The mould according to any of claims 8 or 9, **characterised in that** the lower die (302) comprises an orifice (306) configured to enable the cut material to pass through the interference generated between the projection (303) of the upper die (301) and the projection (303) of the lower die (302).

11. The mould according to claim 8, **characterised in that** between the projection (303) of the upper die (301) and the projection (303) of the lower die (302) there is a filling space (305) configured to be filled with the material cut by the interference generated between the projection (303) of the upper die (301) and the projection (303) of the lower die (302).

12. The mould according to claims 8 or 11, **characterised in that** the upper die (301) of the mould comprises at least one notch (307) around the projection (303), wherein the at least one notch (307) is configured to produce a perimeter recess (212) around the handle (2).

13. A method for manufacturing a loading floor panel (1) for the boot of a vehicle, **characterised in that** it comprises:
- inserting a laminar arrangement of materials to form the loading floor panel (1) into a mould according to any of claims 7 to 11, and;
- pressing the laminar arrangement of materials inside the mould to form the loading floor panel (1), the handle (2) forming a single body with the loading floor panel (1).

14. The method for manufacturing a loading floor panel (1) according to claim 13, **characterised in that** it comprises arranging inside a mould according to any of claims 7 to 12, prior to shaping the loading floor panel (1), a covering layer (212) on the laminar arrangement of materials, and pressing the laminar arrangement of materials with the covering layer (212) inside the mould, obtaining a loading floor panel (1) wherein the covering layer (212) covers the first wall (201) and the upper section (202a) of the second wall (202) of the handle (2).

15. The method for manufacturing a loading floor panel (1) according to claim 13, **characterised in that** it comprises, after shaping the loading floor panel (1) inside the mould according to claim 12, positioning a covering layer (212) on the loading floor panel (1) and making an opening in the covering layer (212) in correspondence with the handle (2), and adhering the covering layer (212) to the upper surface (208) of the loading floor panel (1), folding the covering layer (212) in the perimeter recess (211) in correspondence with the edge of the opening made.

16. The method for manufacturing a loading floor panel (1) according to claim 13, **characterised in that** it comprises, after shaping the loading floor panel (1) inside the mould according to claim 12, positioning a covering layer (212) on the loading floor panel (1) and making an opening in the covering layer (212) in correspondence with the handle (2), and adhering the covering layer (212) to the upper surface (208) of the loading floor panel (1), folding the covering layer (212) along the perimeter recess (211) in correspondence with the edge of the opening made, except in a section in correspondence with the second wall (202) of the handle (2), edging with the covering layer (212) at least the upper section (202a) and the second platform (202b) of the second wall (202).

17. The method for manufacturing a loading floor panel (1) according to any of claims 13 to 16, **characterised in that** the laminar arrangement of materials inserted inside the mould comprises a core (701) of cellulosic material arranged between two adjacent layers (702) of fibreglass, and spraying the assembly with a spray of polyol and isocyanate to form a layer of polyurethane, and pressing the arrangement of materials inside the mould, producing the cut to form the handle (2) before the polyurethane has completely reacted, such that the polyurethane completely covers the core (701) of cellulosic material on all the edges of the handle (2) generated in the pressure and cutting steps of the loading floor panel (1).

## Patentansprüche

1. Ladebodenplatte (1) für einen Kofferraum eines Fahrzeugs, umfassend einen Griff (2), wobei der Griff (2) einen einzigen Körper mit der Ladebodenplatte (1) bildet, wobei der Griff (2) eine Geometrie umfasst, umfassend eine erste Wand (201) und eine zweite Wand (202), wobei die erste Wand (201) einen Einlassabschnitt (201a) umfasst, der eine erste Rampe, eine erste Plattform (201b) und einen Auslassabschnitt (201c) in der Nähe der zweiten Wand (202) bildet, und wobei die zweite Wand (202) einen oberen Abschnitt (202a) in der Nähe der ersten Wand (201), eine zweite Plattform (202b) und einen unteren Abschnitt (202c) bildet, wobei die zweite Plattform (202b) auf einer Höhe angeordnet ist, die gleich wie oder grösser als die erste Plattform (201b) ist, so dass der Griff (2) derart konfiguriert ist, dass, wenn eine Hand durch den Griff (2) eingeführt wird, der Einlassabschnitt (201a) und die erste Plattform (201b) der ersten Wand (201) die Hand zum unteren Abschnitt (202c) der zweiten Wand (202) in einen Raum führen, der sich unter der zweiten Plattform (202b) befindet, wodurch einer Person ermöglicht wird, die Ladebodenplatte (1) mit der Hand durch Ziehen des Griffs (2) nach oben durch die zweite Plattform (202b) davon anzuheben.

2. Ladebodenplatte (1) nach Anspruch 1, **dadurch gekennzeichnet, dass** die erste Wand (201) eine stufenförmige Geometrie umfasst, umfassend den Einlassabschnitt (201a), die erste Plattform (201b) und den Auslassabschnitt (201c), wobei der Einlassabschnitt (201a) die obere Fläche (208) der Ladebodenplatte (1) mit der ersten Plattform (201b) mit Hilfe der ersten Rampe abfallender Höhe in Verbindung bringt, und wobei der Auslassabschnitt (201c) die erste Plattform (201b) mit der unteren Fläche (209) der Ladebodenplatte (1) in Verbindung bringt.

3. Ladebodenplatte (1) nach einem der Ansprüche 1 oder 2, **dadurch gekennzeichnet, dass** die zweite Wand (202) eine stufenförmige Geometrie umfasst, die komplementär zur stufenförmigen Geometrie der ersten Wand (201) ist, wobei der obere Abschnitt (202a) der zweiten Wand (202) die obere Fläche (208) der Ladebodenplatte (1) mit der zweiten Plattform (202b) der ersten Wand in Verbindung bringt, und wobei der untere Abschnitt (202c) der zweiten Wand (202) die zweite Plattform (202b) mit der unteren Fläche (209) der Ladebodenplatte (1) in Verbindung bringt.

4. Ladebodenplatte (1) nach einem der vorhergehenden Ansprüche, **dadurch gekennzeichnet, dass** der Griff (2) einen hohlen Raum in einer Vorrückrichtung des Fahrzeugs zwischen dem Auslassabschnitt (201c) der ersten Wand (201) und dem oberen Abschnitt (202a) der zweiten Wand (202) umfasst.

5. Ladebodenplatte (1) nach einem der vorhergehenden Ansprüche, **dadurch gekennzeichnet, dass** sie Folgendes umfasst:
- in Übereinstimmung mit einer oberen Fläche (208) der Ladebodenplatte (1) eine Deckschicht (212), und/oder
- eine Umfangsvertiefung (211), die den Umfang des Griffs (2) umgibt.

6. Ladebodenplatte (1) nach einem der vorhergehenden Ansprüche, **dadurch gekennzeichnet, dass** sie von einer laminaren Struktur gebildet ist, umfassend eine Kern (701) aus Zellulosematerial, benachbarte Schichten (702) aus Glasfaser auf jeder Seite des Kerns (701) und Endschichten (703) aus Polyurethan oder Polypropylen auf einer Außenseite jeder der benachbarten Schichten (702).

7. Form zur Herstellung der Ladebodenplatte (1) für den Kofferraum eines Fahrzeugs nach einem der Ansprüche 1 bis 6, wobei die Form ein oberes Gesenk (301) und ein unteres Gesenk (302) umfasst, die konfiguriert sind, um eines auf dem anderen durch Drücken einer Anordnung von Materialien zu schließen, die zuvor in einen Hohlraum eingeführt wurden, der zwischen dem oberen Gesenk (301) und dem unteren Gesenk (302) der Form zur Herstellung der Ladebodenplatte (1) erzeugt wurde, **dadurch gekennzeichnet, dass** das obere Gesenk (301) und das untere Gesenk (302) Vorsprünge (303) umfassen, die in gegenseitiger Übereinstimmung angeordnet sind, wenn das obere Gesenk (301) gegen das untere Gesenk (302) geschlossen ist, wobei die Vorsprünge (303) konfiguriert sind, um einen Griff (2) auf der Ladebodenplatte (1) zu formen.

8. Form nach Anspruch 7, **dadurch gekennzeichnet, dass** der Vorsprung (303) des oberen Gesenks (301) Klingen (304) umfasst, um Material zu schneiden, und/oder der Vorsprung (303) des unteren Gesenks (302) Klingen (304) umfasst, um Material zu schneiden.

9. Form nach Anspruch 8, **dadurch gekennzeichnet, dass** das obere Gesenk (301) einen gleitenden Teil (301b) umfasst, in dem sich der Vorsprung (303) des oberen Gesenks (301) befindet, wobei der Gleiter (301b) konfiguriert ist, um sich mit Bezug auf den Rest des oberen Gesenks (301) gemäß einer Richtung schräg zu einer oberen Fläche (208) der Ladebodenplatte (1) zu neigen, wodurch das Material der Ladebodenplatte (1) zur Herstellung des Griffs (2) geschnitten wird.

10. Form nach einem der Ansprüche 8 oder 9, **dadurch gekennzeichnet, dass** das untere Gesenk (302) eine Öffnung (306) aufweist, die konfiguriert ist, um zu ermöglichen, dass das geschnittene Material durch die Schnittstelle verläuft, die zwischen dem Vorsprung (303) des oberen Gesenks (301) und dem Vorsprung (303) des unteren Gesenks (302) erzeugt wurde.

11. Form nach Anspruch 8, **dadurch gekennzeichnet, dass** zwischen dem Vorsprung (303) des oberen Gesenks (301) und dem Vorsprung (303) des unteren Gesenks (302) ein Füllraum (305) vorhanden ist, der konfiguriert ist, um mit dem Material gefüllt zu werden, das durch die Schnittstelle, die zwischen dem Vorsprung (303) des oberen Gesenks (301) und dem Vorsprung (303) des unteren Gesenks (302) erzeugt wurde, geschnitten wurde.

12. Form nach einem der Ansprüche 8 oder 11, **dadurch gekennzeichnet, dass** das obere Gesenk (301) der Form mindestens eine Kerbe (307) um den Vorsprung (303) umfasst, wobei die mindestens eine Kerbe (307) konfiguriert ist, um eine Umfangsaussparung (212) um den Griff (2) zu erzeugen.

13. Verfahren zum Herstellen einer Ladebodenplatte (1) für den Kofferraum eines Fahrzeugs, **dadurch gekennzeichnet, dass** es Folgendes umfasst:
- Einführen einer laminaren Anordnung von Materialien, um die Ladebodenplatte (1) in eine Form nach einem der Ansprüche 7 bis 11 zu bilden, und
- Drücken der laminaren Anordnung von Materialien innerhalb der Form, um die Ladebodenplatte (1) zu bilden, wobei der Griff (2) einen einzigen Körper mit der Ladebodenplatte (1) bildet.

14. Verfahren zum Herstellen einer Ladebodenplatte (1) nach Anspruch 13, **dadurch gekennzeichnet, dass** es das Anordnen innerhalb einer Form nach einem der Ansprüche 7 bis 12 vor dem Formen der Ladebodenplatte (1), einer Deckschicht (212) auf der laminaren Anordnung von Materialien und Drücken der laminaren Anordnung von Materialien mit der Deckschicht (212) innerhalb der Form umfasst, wodurch eine Ladebodenplatte (1) erhalten wird, wobei die Deckschicht (212) die erste Wand (201) und den oberen Abschnitt (202a) der zweiten Wand (202) des Griffs (2) abdeckt.

15. Verfahren zum Herstellen einer Ladebodenplatte (1) nach Anspruch 13, **dadurch gekennzeichnet, dass** es, nach dem Formen der Ladebodenplatte (1) innerhalb der Form nach Anspruch 12, das Positionieren einer Deckplatte (212) auf der Ladebodenplatte (1) und das Durchführen einer Öffnung in der Deckschicht (212) in Übereinstimmung mit dem Griff (2) und Haften der Deckschicht (212) an die obere Fläche (208) der Ladebodenplatte (1), Falten der Deckschicht (212) in der Umfangsaussparung (211) in Übereinstimmung mit der Kante der durchgeführten Öffnung umfasst.

16. Verfahren zum Herstellen einer Ladebodenplatte (1) nach Anspruch 13, **dadurch gekennzeichnet, dass** es, nach dem Formen der Ladebodenplatte (1) innerhalb der Form nach Anspruch 12 das Positionieren der Deckplatte (212) auf der Ladebodenplatte (1) und das Durchführen einer Öffnung in der Deckschicht (212) in Übereinstimmung mit dem Griff (2) und Haften der Deckschicht (212) an die obere Fläche (208) der Ladebodenplatte (1), Falten der Deckschicht (212) entlang der Umfangsaussparung (211) in Übereinstimmung mit der Kante der durchgeführten Öffnung, außer in einem Abschnitt in Übereinstimmung mit der zweiten Wand (202) des Griffs (2), Begrenzen der Deckschicht (212) mindestens des oberen Abschnitts (202a) und der zweiten Plattform (202b) der zweiten Wand (202) umfasst.

17. Verfahren zum Herstellen einer Ladebodenplatte (1) nach einem der Ansprüche 13 bis 16, **dadurch gekennzeichnet, dass** die laminare Anordnung von Materialien, die in die Form eingeführt ist, einen Kern (701) aus Zellulosematerial umfasst, der zwischen zwei benachbarten Schichten (702) von Glasfaser angeordnet ist, und Besprühen der Einheit mit einem Spray aus Polyol und Isocyanat, um eine Schicht aus Polyurethan zu bilden, und Drücken der Anordnung von Materialien innerhalb der Form, Herstellen des Schnitts, um den Griff (2) zu bilden, bevor das Polyurethan vollständig reagiert hat, so dass das Polyurethan den Kern (701) des Zellulosematerials auf alle Kanten des Griffs (2), der in den Druck- und Schneideschritten der Ladebodenplatte (1) erzeugt wurde, vollständig bedeckt.

## Revendications

1. Panneau de plancher de chargement (1) destiné à un coffre d'un véhicule comprenant une poignée (2), dans lequel la poignée (2) forme un seul corps avec le panneau de plancher de chargement (1), dans lequel la poignée (2) comprend une géométrie comprenant une première paroi (201) et une deuxième paroi (202), dans lequel la première paroi (201) comprend une section d'entrée (201a) qui forme une première rampe, une première plate-forme (201b) et une section de sortie (201c) à proximité de la deuxième paroi (202), et dans lequel la deuxième paroi (202) comprend une section supérieure (202a) à proximité de la première paroi (201), une deuxième plate-forme (202b), et une section inférieure (202c), dans lequel la deuxième plate-forme (202b) est prévue à une hauteur égale ou supérieure à celle de la première plate-forme (201b), de sorte que la poignée (2) soit configurée afin que, lors de l'insertion d'une main dans ladite poignée (2), la section d'entrée (201a) et la première plate-forme (201b) de la première paroi (201) guident la main vers la section inférieure (202c) de la deuxième paroi (202), dans un espace situé sous la deuxième plate-forme (202b), afin de permettre à une personne de soulever le panneau de plancher de chargement (1) avec sa main en tirant sur la poignée (2) par la deuxième plate-forme (202b) de celle-ci.

2. Panneau de plancher de chargement (1) selon la revendication 1, **caractérisé en ce que** la première paroi (201) comprend une géométrie en forme de marche, comprenant la section d'entrée (201a), la première plate-forme (201b) et la section de sortie (201c), dans lequel la section d'entrée (201a) fait communiquer la surface supérieure (208) du panneau de plancher de chargement (1) avec la première plate-forme (201b) à l'aide de la première rampe d'une hauteur décroissante, et dans lequel la section de sortie (201c) fait communiquer la première plate-forme (201b) avec la surface inférieure (209) du panneau de plancher de chargement (1).

3. Panneau de plancher de chargement (1) selon l'une quelconque des revendications 1 ou 2, **caractérisé en ce que** la deuxième paroi (202) comprend une géométrie en forme de marche complémentaire à la géométrie en forme de marche de la première paroi (201), dans lequel la section supérieure (202a) de la deuxième paroi (202) fait communiquer la surface supérieure (208) du panneau de plancher de chargement (1) avec la deuxième plate-forme (202b) de la première paroi, et dans lequel la section inférieure (202c) de la deuxième paroi (202) fait communiquer la deuxième plate-forme (202b) avec la surface inférieure (209) du panneau de plancher de chargement (1).

4. Panneau de plancher de chargement (1) selon l'une quelconque des revendications précédentes, **caractérisé en ce que** la poignée (2) comprend un espace creux, selon une direction d'avancée du véhicule, entre la section de sortie (201c) de la première paroi (201) et la section supérieure (202a) de la deuxième paroi (202).

5. Panneau de plancher de chargement (1) selon l'une quelconque des revendications précédentes, **caractérisé en ce qu'**il comprend :
- en correspondance avec une surface supérieure (208) du panneau de plancher de chargement (1), une couche de recouvrement (212), et/ou ;
- un renfoncement périmétrique (211) qui entoure le périmètre de la poignée (2).

6. Panneau de plancher de chargement (1) selon l'une quelconque des revendications précédentes, **caractérisé en ce qu'**il est formé par une structure laminaire comprenant un noyau (701) en matériau cellulosique, des couches adjacentes (702) de fibre de verre de chaque côté du noyau (701), et des couches d'extrémité (703) composées de polyuréthane ou de polypropylène sur une face externe de chacune des couches adjacentes (702).

7. Moule destiné à fabriquer le panneau de plancher de chargement (1) destiné à un coffre d'un véhicule selon l'une quelconque des revendications 1 à 6, dans lequel le moule comprend une matrice supérieure (301) et une matrice inférieure (302) configurées pour se fermer l'une sur l'autre en appuyant sur un ensemble de matériaux préalablement insérés dans une cavité créée entre la matrice supérieure (301) et la matrice inférieure (302) du moule destiné à fabriquer le panneau de plancher de chargement (1), **caractérisé en ce que** la matrice supérieure (301) et la matrice inférieure (302) comprennent des saillies (303) qui se trouvent en correspondance mutuelle lorsque la matrice supérieure (301) est fermée contre la matrice inférieure (302), dans lequel lesdites saillies (303) sont configurées pour mettre en forme une poignée (2) sur ledit panneau de plancher de chargement (1).

8. Moule selon la revendication 7, **caractérisé en ce que** la saillie (303) de la matrice supérieure (301) comprend des lames (304) destinées à découper le matériau et/ou la saillie (303) de la matrice inférieure (302) comprend des lames (304) destinées à découper le matériau.

9. Moule selon la revendication 8, **caractérisé en ce que** la matrice supérieure (301) comprend une partie coulissante (301b) dans laquelle la saillie (303) de la matrice supérieure (301) se trouve, dans lequel la partie coulissante (301b) est configurée pour s'incliner par rapport au reste de la matrice supérieure (301) selon une direction oblique par rapport à une surface supérieure (208) du panneau de plancher de chargement (1), afin de découper le matériau du panneau de plancher de chargement (1) de façon à produire la poignée (2).

10. Moule selon l'une quelconque des revendications 8 ou 9, **caractérisé en ce que** la matrice inférieure (302) comprend un orifice (306) configuré pour permettre au matériau découpé de passer à travers l'interférence créée entre la saillie (303) de la matrice supérieure (301) et la saillie (303) de la matrice inférieure (302).

11. Moule selon la revendication 8, **caractérisé en ce que**, entre la saillie (303) de la matrice supérieure (301) et la saillie (303) de la matrice inférieure (302), se trouve un espace de remplissage (305) configuré pour être rempli avec le matériau découpé par l'interférence créée entre la saillie (303) de la matrice supérieure (301) et la saillie (303) de la matrice inférieure (302).

12. Moule selon la revendication 8 ou 11, **caractérisé en ce que** la matrice supérieure (301) du moule comprend au moins une encoche (307) autour de la saillie (303), dans lequel la au moins une encoche (307) est configurée pour produire un renfoncement périmétrique (212) autour de la poignée (2).

13. Procédé de fabrication d'un panneau de plancher de chargement (1) destiné au coffre d'un véhicule, **caractérisé en ce qu'**il comprend :
- l'insertion d'un ensemble laminaire de matériaux afin de former le panneau de plancher de chargement (1) dans un moule selon l'une quelconque des revendications 7 à 11, et ;
- le fait de presser l'ensemble laminaire de matériaux à l'intérieur du moule afin de former le panneau de plancher de chargement (1), la poignée (2) formant un seul tenant avec le panneau de plancher de chargement (1).

14. Procédé de fabrication d'un panneau de plancher de chargement (1) selon la revendication 13, **caractérisé en ce qu'**il comprend le placement, à l'intérieur d'un moule selon l'une quelconque des revendications 7 à 12, avant la mise en forme du panneau de plancher de chargement (1), d'une couche de recouvrement (212) sur l'ensemble laminaire de matériaux, et le fait de presser l'ensemble laminaire de matériaux avec la couche de recouvrement (212) à l'intérieur du moule, afin d'obtenir un panneau de plancher de chargement (1), dans lequel la couche de recouvrement (212) recouvre la première paroi (201) et la section supérieure (202a) de la deuxième paroi (202) de la poignée (2).

15. Procédé de fabrication d'un panneau de plancher de chargement (1) selon la revendication 13, **caractérisé en ce qu'**il comprend, après la mise en forme du panneau de plancher de chargement (1) à l'intérieur du moule selon la revendication 12, le positionnement d'une couche de recouvrement (212) sur le panneau de plancher de chargement (1) et la création d'une ouverture dans la couche de recouvrement (212) en correspondance avec la poignée (2), et le fait de coller la couche de recouvrement (212) sur la surface supérieure (208) du panneau de plancher de chargement (1), en repliant la couche de recouvrement (212) dans le renfoncement périmétrique (211) en correspondance avec le bord de l'ouverture créée.

16. Procédé de fabrication d'un panneau de plancher de chargement (1) selon la revendication 13, **caractérisé en ce qu'**il comprend, après la mise en forme du panneau de plancher de chargement (1) à l'intérieur du moule selon la revendication 12, le positionnement d'une couche de recouvrement (212) sur le panneau de plancher de chargement (1) et la création d'une ouverture dans la couche de recouvrement (212) en correspondance avec la poignée (2), et le fait de coller la couche de recouvrement (212) sur la surface supérieure (208) du panneau de plancher de chargement (1), en repliant la couche de recouvrement (212) le long du renfoncement périmétrique (211) en correspondance avec le bord de l'ouverture créée, excepté dans une section en correspondance avec la deuxième paroi (202) de la poignée (2), en approchant de la couche de recouvrement (212) au moins la section supérieure (202a) et la deuxième plate-forme (202b) de la deuxième paroi (202).

17. Procédé de fabrication d'un panneau de plancher de chargement (1) selon l'une quelconque des revendications 13 à 16, **caractérisé en ce que** l'ensemble laminaire de matériaux inséré à l'intérieur du moule comprend un noyau (701) de matériau cellulosique prévu entre deux couches adjacentes (702) de fibre de verre, la pulvérisation de l'ensemble avec un jet de polyol et d'isocyanate afin de former une couche de polyuréthane, et le fait de presser l'ensemble de matériaux à l'intérieur du moule, en produisant la découpe destinée à former la poignée (2) avant que le polyuréthane ait complètement réagi, de sorte que le polyuréthane recouvre entièrement le noyau (701) de matériau cellulosique sur tous les bords de la poignée (2) créés aux étapes de pressurisation et de découpe du panneau de plancher de chargement (1).
